# EUROPEAN PATENT SPECIFICATION

(11) **EP 4 184 788 B1**
(45) Date of publication and mention of the grant of the patent: **02.09.2026**
(21) Application number: 20962699.3
(22) Date of filing: 24.11.2020
(51) Int. Cl.: H02P 29/00, B60H 1/00, H02P 29/62, B60L 15/20, B60L 58/27

(54) **MOTOR CONTROLLER, HEAT EXCHANGE SYSTEM, AND CURRENT INJECTION METHOD**
MOTORSTEUERUNG, WÄRMETAUSCHERSYSTEM UND STROMINJEKTIONSVERFAHREN
CONTRÔLEUR DE MOTEUR, SYSTÈME D'ÉCHANGE DE CHALEUR ET PROCÉDÉ D'INJECTION DE COURANT

(43) Date of publication of application: 24.05.2023
(73) Proprietor: Huawei Digital Power Technologies Co., Ltd., Shenzhen, Guangdong 518043 (CN)
(72) Inventor: SHI, Chaojie, Shenzhen, Guangdong 518129 (CN); WU, Xiaopeng, Shenzhen, Guangdong 518129 (CN); WU, Chaoqiang, Shenzhen, Guangdong 518129 (CN); XIE, Xiaowei, Shenzhen, Guangdong 518129 (CN); LIU, Hongbing, Shenzhen, Guangdong 518129 (CN)
(74) Representative: Gill Jennings & Every LLP
(86) International application number: PCT/CN2020/131243
(87) International publication number: WO 2022/109808

(56) References cited:
- WO-A1-2020/125625
- CN-A- 104 808 148
- CN-A- 110 247 607
- CN-A- 110 798 117
- CN-A- 111 376 672
- CN-A- 111 490 714
- CN-A- 111 959 252
- CN-B- 103 825 060
- CN-U- 209 358 458
- US-A1- 2009 315 492
- US-A1- 2012 200 241
- US-A1- 2022 077 709

## Description

### TECHNICAL FIELD

This application relates to the field of new energy vehicle technologies, and in particular, to a motor controller, a heat exchange system, and a current injection method.

### BACKGROUND

With development of technologies in the new energy field, new energy vehicles are more widely used, for example, an electric car/an electric vehicle/a hybrid vehicle. In a low temperature environment, performance of a power battery of the electric car/electric vehicle is degraded. Therefore, the power battery needs to be heated to improve performance of the power battery.

In the conventional technology, a heating solution for the power battery is as follows: A current is input to a motor, an end winding of the motor is used to emit heat, and then the generated heat is emitted through a heat exchange system, to heat the power battery. Because neither of iron loss and permanent magnet loss of the motor can be excited in this solution, heat emission power is relatively low, and a heating speed for the power battery is relatively low.

Therefore, there are problems of the low heat emission power and the low heating speed for the power battery in the solution provided in the conventional technology.

US 2012/0200241 A1 discloses a control device for vehicle electric drive motor and vehicle with the same. A controller for vector-controlled motor of vehicle judges whether a battery needs to be warmed up in accordance with an output of a battery temperature sensor, and when the battery needs to be warmed up, in situation (i) where the vehicle is stopped, sets a q-axis current value of the motor at zero, or when a brake is released from the situation (i), sets a q-axis current at a value corresponding to a drive torque for a vehicle creep operation, and sets ad-axis current at a value for battery warm-up. When the battery needs to be warmed up in situation (ii) where the vehicle is running, the controller sets a q-axis current at a value corresponding to a drive torque of vehicle running and sets a d-axis current at a value for the battery warm-up in relation to the q-axis current value.

WO 2020/125625 A1 discloses a charging method for power battery, motor control circuit, and vehicle.

CN 110 798 117 A discloses a double-electric-port driving system of magnetic field modulation switched reluctance motor and control method.

CN 103 825 060 B discloses a battery low-temperature preheating and charging method.

EP 4 043 254 A1 discloses an energy conversion device and vehicle.

### SUMMARY

Embodiments of this application provide a motor controller, a heat exchange system, and a current injection method, to improve heating efficiency of a motor.

According to a first aspect, an embodiment of this application provides a motor controller. The motor controller includes a control apparatus and an inverter circuit. The control apparatus is configured to control the inverter circuit to input an alternating current to a motor, where the alternating current has a direct current bias, and the alternating current is used to heat the motor. The inverter circuit is configured to output the alternating current to a direct axis or a zero axis of the motor under control of the control apparatus.

The alternating current may be any one of a sine wave, a rectangular wave, a triangular wave, a sawtooth wave, and a trapezoidal wave, or may be another non-direct current that changes periodically.

According to the motor controller provided in the first aspect, because no current is input to a quadrature axis of the motor, the motor does not have additional vibration or torque. The alternating current with the direct current bias is input to the direct axis or the zero axis. Compared with a manner in which only an end winding is used to emit heat in the conventional technology, because a current that is input to the motor includes an alternating component, iron loss and permanent magnet loss of the motor can be effectively excited, and heat emission power of the motor can be improved, so that a heating speed for a power battery is improved.

A three-phase three-wire system is used for the inverter circuit. The inverter circuit is specifically configured to output a first alternating current with a direct current bias to the direct axis of the motor under control of the control apparatus.

According to the foregoing solution, because no current is input to a quadrature axis of the motor, the motor does not have additional vibration or torque. The first alternating current that has the direct current bias and that is input to the direct axis includes an alternating component. Therefore, iron loss and permanent magnet loss of the motor can be effectively excited, and heat emission power of the motor can be improved, so that a heating speed for a power battery is improved.

In another possible design, a three-phase four-wire system is used for the inverter circuit. The inverter circuit is specifically configured to output a second alternating current with a direct current bias to the zero axis of the motor under control of the control apparatus, or output a third alternating current with a direct current bias to the direct axis of the motor under control of the control apparatus.

According to the foregoing solution, because no current is input to a quadrature axis of the motor, the motor does not have additional vibration or torque. The second alternating current that has the direct current bias and that is input to the zero axis includes an alternating component. Therefore, iron loss and permanent magnet loss of the motor can be effectively excited, and heat emission power of the motor can be improved, so that a heating speed for a power battery is improved.

In addition, when the second alternating current with the direct current bias is input to the zero axis of the motor, a three-phase current has a same amplitude and a same phase. Therefore, a three-phase winding in the motor evenly emits heat and has a same temperature, and a case in which one phase winding reaches a temperature limit but temperatures of the other two phase windings are relatively low does not occur, so that a heat emission capability of the winding can be more fully utilized.

Further, the inverter circuit is connected to a direct current bus. A two-level topology is used for the inverter circuit, and a neutral point of the inverter circuit is connected to a positive electrode of the direct current bus through a first switch unit and a first inductor. Alternatively, a two-level topology is used for the inverter circuit, and a neutral point of the inverter circuit is connected to a negative electrode of the direct current bus through a second switch unit and a second inductor. Alternatively, a two-level topology is used for the inverter circuit, a neutral point of the inverter circuit is connected to a positive electrode of the direct current bus through a third switch unit and a third inductor, and the neutral point of the inverter circuit is connected to a negative electrode of the direct current bus through a fourth switch unit and a fourth inductor.

According to the foregoing solution, a star point loop (neutral line loop) may be provided for a current flowing through a neutral line of a power supply in a three-wire system or a four-wire system.

In addition, if an open-winding structure or a multi-level topology is used for the inverter circuit, there is no need to additionally connect the star point loop.

In a possible design, the alternating current has no negative value.

Having no negative value means that the alternating current has a positive value at any time. If the alternating current has no negative value, a magnetic field generated by a winding is a pulsating magnetic field with only an amplitude change but without a direction change, and no demagnetization field is generated. Therefore, a demagnetization risk in a motor heating process can be reduced, and electromagnetic vibration and noise that are caused by positive and negative changes of a magnetic field in a same direction are reduced.

According to a second aspect, an embodiment of this application provides a heat exchange system, including a motor, a heat exchanger, a hydraulic pump, a power battery, and the motor controller provided in any one of the first aspect and the possible designs of the first aspect. The motor, the heat exchanger, and the hydraulic pump are connected through a pipe. The motor controller is configured to output an alternating current to a direct axis or a zero axis of the motor. The alternating current has a direct current bias, and is used to enable the motor to emit heat. The hydraulic pump is configured to drive the pipe, so that the heat emitted by the motor is exchanged to the power battery through the heat exchanger.

In a possible design, the motor is an oil-cooled motor.

For a specific function and structure of the motor controller in the heat exchange system provided in the second aspect, refer to related description of the motor controller provided in the first aspect.

According to a third aspect, an embodiment of this application provides a current injection method. The method includes the following steps: A motor controller determines a parameter of an alternating current that is to be output to a motor, where the alternating current has a direct current bias, and the alternating current is used to heat the motor; and the motor controller outputs the alternating current to a direct axis or a zero axis of the motor.

Specifically, parameters of the alternating current include a waveform, a phase, an amplitude, a frequency, a direct current bias value, and the like of the alternating current.

The alternating current that is output to the motor is used to heat the motor, so as to heat a power battery. Therefore, the motor controller may determine the parameter of the alternating current based on factors such as a temperature of the motor, a temperature of the power battery, and a current limit and a temperature limit of a three-phase winding of the motor.

The current injection method provided in the third aspect may be considered as a method performed by the motor controller provided in the first aspect. For a specific implementation, refer to related description of the motor controller provided in the first aspect.

According to a fourth aspect, an embodiment of this application further provides a power assembly, including a motor, a decelerator, and the motor controller provided in any one of the first aspect and the possible designs of the first aspect.

According to a fifth aspect, an embodiment of this application further provides a vehicle, including a power battery and the power assembly provided in the fourth aspect.

In addition, for a technical effect brought by any possible design manner in the second aspect to the fifth aspect, refer to a technical effect brought by different design manners in the first aspect. Details are not described herein again.

### BRIEF DESCRIPTION OF DRAWINGS

FIG. 1 is a schematic diagram of a structure of a heat exchange system according to an embodiment of this application;
FIG. 2 is a schematic diagram of a structure of a motor according to an embodiment of this application;
FIG. 3 is a schematic diagram of a structure of a motor controller according to an embodiment of this application;
FIG. 4 is a schematic diagram of an alternating current with a direct current bias according to an embodiment of this application;
FIG. 5 is a schematic diagram of an alternating current with a small quantity of negative values according to an embodiment of this application;
FIG. 6 is a schematic diagram of a structure of an inverter circuit using a three-phase three-wire system according to an embodiment of this application;
FIG. 7 is a schematic diagram of a three-phase current that is output to a motor according to an embodiment of this application;
FIG. 8 is a schematic diagram of a structure of an inverter circuit using a three-phase four-wire system according to an embodiment of this application;
FIG. 9 is a schematic diagram of another three-phase current that is output to a motor according to an embodiment of this application;
FIG. 10 is a schematic diagram of a structure of a star point loop according to an embodiment of this application;
FIG. 11 is a schematic diagram of a structure of an inverter circuit according to an embodiment of this application;
FIG. 12 is a schematic diagram of a structure of an inverter circuit with a three-level topology according to an embodiment of this application;
FIG. 13 is a schematic diagram of a structure of another heat exchange system according to an embodiment of this application;
FIG. 14 is a schematic flowchart of a current injection method according to an embodiment of this application;
FIG. 15 is a schematic diagram of a structure of a power assembly according to an embodiment of this application; and
FIG. 16 is a schematic diagram of a structure of a vehicle according to an embodiment of this application.

### DESCRIPTION OF EMBODIMENTS

The following first describes an application scenario in embodiments of this application.

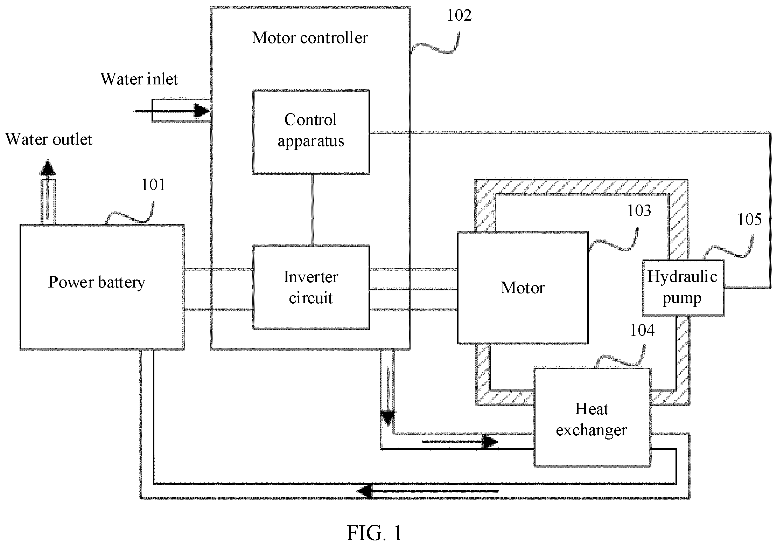

A heat exchange system shown in FIG. 1 may be used in the embodiments of this application. The heat exchange system may be a heat exchange system in an electric vehicle.

The heat exchange system shown in FIG. 1 includes a power battery 101, a motor controller 102, a motor 103, a heat exchanger 104, and a hydraulic pump 105.

The power battery 101 is configured to output a direct current, and may be, for example, a storage battery, a lithium battery, a fuel cell, or a supercapacitor. The motor controller may also be referred to as a motor control unit (MCU), and includes a control apparatus and an inverter circuit. The motor 103 may be a permanent magnet synchronous motor, an asynchronous motor, a reluctance motor, an electrical excitation motor, or the like.

The power battery 101 is connected to the inverter circuit through a direct current bus, and the inverter circuit is connected to the motor 103 through a three-phase wire. The motor 103, the heat exchanger 104, and the hydraulic pump 105 are coupled through an oil-cooled pipe in which insulating coolant flows. The insulating coolant may include mineral insulating oil, synthetic insulating oil, vegetable oil, and the like. The motor controller 102, the heat exchanger 104, and the power battery 101 are coupled through a water-cooled pipe. A water inlet of the water-cooled pipe is disposed around the motor controller 102, and a water outlet is disposed around the power battery 101. Particularly, the heat exchanger 104 may be disposed around the power battery 101, to facilitate heat exchange with the power battery 101. There is no insulation requirement for coolant in the water-cooled pipe. For example, the coolant may be water, alcohol, or a mixture of different types of antifreeze fluid. For ease of description, in this embodiment of this application, an example in which the coolant flowing in the water-cooled pipe is water is used for description.

In this embodiment of this application, the motor controller 102 injects a current into the motor 103, to heat the motor 103. Heat generated by the motor 103 is exchanged to the power battery 101 through the heat exchanger 104, to heat the power battery 101, so as to improve performance of the power battery 101.

Specifically, the foregoing process of heating the power battery 101 may be as follows: The control apparatus controls the inverter circuit to inject the current into the motor 103, and the motor 103 emits heat. The hydraulic pump 105 pumps insulating coolant between the motor 103 and the heat exchanger 104, so that the heat emitted by the motor 103 is transferred to the heat exchanger 104, and the motor 103 is cooled. The heat emitted by the motor 103 is exchanged to water in the water-cooled pipe at the heat exchanger 104. The water in the water-cooled pipe transfers the heat to the power battery 101 for heating the power battery 101.

In addition, in this embodiment of this application, when the motor controller 102 works, heat emitted by a resistor in the motor controller 102 is also transferred to the power battery 101 through the water-cooled pipe, to heat the power battery 101.

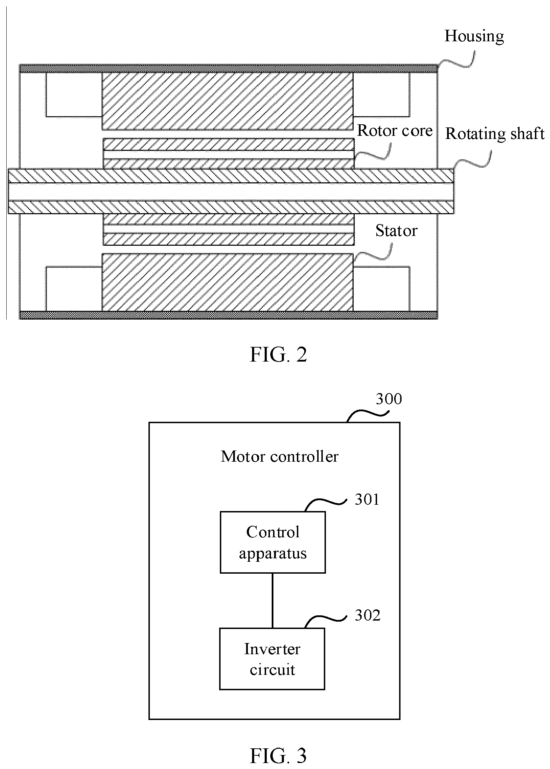

In the heat exchange system shown in FIG. 1, a schematic diagram of a possible structure of the motor 103 may be shown in FIG. 2. In a cross-sectional view shown in FIG. 2, the motor 103 includes a housing, a rotor core, a stator, and a rotating shaft. A winding (not shown in FIG. 2) is wound around the stator. The winding is a coil wound around iron teeth of the stator of the motor, and is configured to provide a path for a current that is input to the motor. Parts extending out of a stator core at two ends in an axial direction of the rotating shaft of the motor are referred to as end windings. A material of the winding is usually copper. A permanent magnet (not shown in FIG. 2) is installed on the rotor core for generating an excited magnetic field. Oil channels are reserved in the housing, the rotating shaft, and the rotor core. When the hydraulic pump 105 drives the oil-cooled pipe, the insulating coolant may flow in an oil channel of the motor 103, so that the heat emitted by the motor 103 is more fully taken away, and the motor 103 is fully cooled. Specifically, the insulating coolant may enter or exit a motor cavity from the housing of the motor, or may enter or exit the motor cavity from both ends of the motor.

In addition, the insulating coolant flowing inside the motor 103 may be further used for lubrication of a motor component including a bearing.

To facilitate better understanding of embodiments of this application, the following describes some basic concepts in embodiments of this application.

### 1. U/V/W three-phase coordinate axis

Currently, a motor of an electric vehicle is usually an alternating current motor, and a power battery is a direct current source. Therefore, a direct current that is output by the power battery is transformed into a three-phase alternating current of the motor through an inverter circuit. Coordinate axes of the three-phase alternating current are separately a U-axis, a V-axis, and a W-axis. Three phases of the alternating current may also be separately referred to as a U phase, a V phase, and a W phase.

### 2. Direct axis, quadrature axis, and zero axis

To simplify analysis of the motor, stationary three-phase coordinates are usually transformed into rotating dq coordinates. Such transformation is park transformation (park transformation).

In a dq coordinate system, three coordinate axes are separately referred to as a direct axis, a quadrature axis, and a zero axis.

The direct axis (direct axis) is also referred to as a D axis or a d-axis, and is a time-varying direct current coordinate axis that is obtained from a stationary U/V/W three-phase coordinate axis through park transformation.

The quadrature axis (quadrature axis) is also referred to as a Q axis or a q-axis, and is a time-varying alternating current coordinate axis that is obtained from the stationary U/V/W three-phase coordinate axis through park transformation.

The zero axis is also referred to as a 0 axis or a 0-axis, and is a coordinate axis that is perpendicular to a dq plane on which the direct axis and the quadrature axis are located.

Specifically, a formula of the park transformation may be as follows: $\left[\begin{matrix}I_d \\ I_q \\ I_ 0\end{matrix}\right] = \frac{2}{3} \left[\begin{matrix}cos \left(θ\right) & cos \left(θ-2π/3\right) & cos \left(θ+2π/3\right) \\ - sin \left(θ\right) & - sin \left(θ-2π/3\right) & - sin \left(θ+2π/3\right) \\ 1 / 2 & 1 / 2 & 1 / 2\end{matrix}\right] \left[\begin{matrix}I_u \\ I_v \\ I_w\end{matrix}\right]$

0 is an included angle between the d-axis and the U-axis. I_d is referred to as a direct axis current, and is mainly used to adjust a magnetic field. I_q is referred to as a quadrature axis current, and is mainly used to adjust torque. I_0 is referred to as a zero-sequence current. I_u, I_v, and I_w are respectively currents on the U-axis, the V-axis, and the W-axis, that is, a three-phase current.

In embodiments of this application, outputting a current to the direct axis of the motor is inputting I_d into the motor, and I_q and I_0 are controlled to be 0. Outputting a current to the zero axis of the motor is inputting I_0 into the motor, and I_d and I_q are controlled to be 0.

The foregoing matrix is an expression for transforming the three-phase current into I_d, I_q, and I_0. An expression for transforming I_d, I_q, and I_0 into the three-phase current may be obtained through inverse transformation of the matrix transformation. Details are not described herein.

Because the three-phase current is a current corresponding to a real winding of the motor, when outputting a current to the direct axis of the motor, a motor controller needs to transform I_d into a three-phase current I_u, I_v, and I_w through inverse transformation of park transformation, and input I_u, I_v, and I_w into the winding of the motor; or when outputting a current to the zero axis of the motor, a motor controller needs to transform I_0 into a three-phase current I_u, I_v, and I_w through inverse transformation of park transformation, and input I_u, I_v, and I_w into the winding of the motor.

### 3. Copper loss, rotor core loss, and eddy current loss of a permanent magnet

The loss of copper is briefly referred to as copper loss, and refers to loss caused by a current flowing in a copper conductor.

The rotor core loss is briefly referred to as iron loss, refers to loss caused on a rotor core in an alternating magnetic field, and includes eddy current loss caused by an eddy current that is produced by induction and hysteresis loss caused due to a hysteresis effect. Similarly, a rotating shaft of a rotor and a stator also cause eddy current loss and hysteresis loss in the alternating magnetic field.

The eddy current loss of the permanent magnet is briefly referred to as permanent magnet loss, and means that the permanent magnet generates an eddy current in an alternating magnetic field, and then corresponding eddy current loss is caused.

The following further describes in detail the embodiments of this application with reference to accompanying drawings.

It should be noted that "a plurality of" in the embodiments of this application means two or more than two. In addition, in the descriptions of this application, terms such as "first" and "second" are merely used for distinction and description, and shall not be understood as an indication or implication of relative importance or an indication or implication of an order.

An embodiment of this application provides a motor controller. As shown in FIG. 3, the motor controller 300 includes a control apparatus 301 and an inverter circuit 302. The control apparatus 301 is configured to control the inverter circuit 302 to input an alternating current to a motor, where the alternating current has a direct current bias and is used to heat the motor. The inverter circuit 302 is configured to output the alternating current to a direct axis or a zero axis of the motor under control of the control apparatus 301.

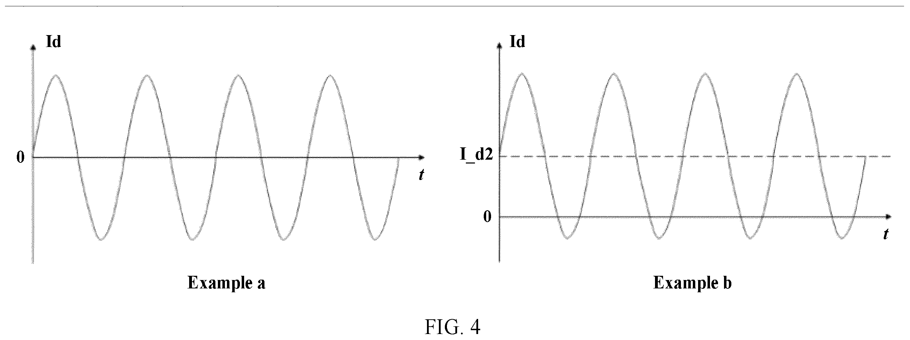

The foregoing alternating current with the direct current bias is obtained after a direct current is superimposed on an alternating current. For example, an example a in FIG. 4 shows an alternating current that has no direct current bias and that is input to the direct axis of the motor, and an example b in FIG. 4 shows an alternating current that has a direct current bias and that is input to the direct axis of the motor. In the example b, Id_1 is a superimposed direct current bias.

It should be noted that in the example in FIG. 4, an example in which an alternating current is a sine wave is used for illustration. In actual application, the alternating current in this embodiment of this application may be any one of a sine wave, a rectangular wave, a triangular wave, a sawtooth wave, and a trapezoidal wave, or may be another non-direct current that changes periodically.

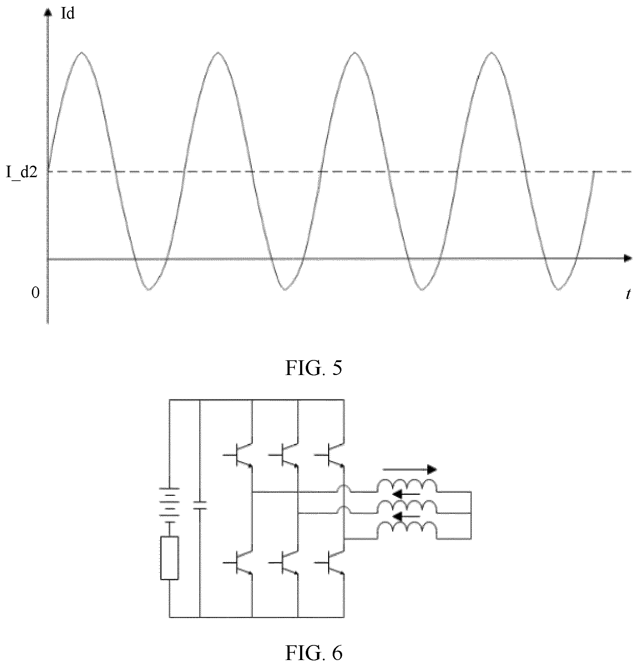

Particularly, in this embodiment of this application, the alternating current that is input to the direct axis or the zero axis may have no negative value or have only a small quantity of negative values. Having no negative value means that the alternating current has a positive value at any time. For example, in the example b in FIG. 4, the alternating current that is input to the direct axis has no negative value. For another example, an alternating current shown in FIG. 5 has only a small quantity of negative values.

If the alternating current has no negative value, a magnetic field generated by a winding is a pulsating magnetic field with only an amplitude change but without a direction change, and no demagnetization field is generated. In this case, it is not difficult to understand that the alternating current has no negative value or has only a small quantity of negative values, so that the winding does not generate a demagnetization field or generate a demagnetization field with only low intensity. Therefore, a demagnetization risk in a motor heating process can be reduced, and electromagnetic vibration and noise that are caused by positive and negative changes of a magnetic field in a same direction are reduced.

The control apparatus 301 controls the inverter circuit 302 to output the alternating current to the direct axis or the zero axis of the motor. Because no current is input to a quadrature axis of the motor, the motor does not have additional vibration or torque. The alternating current with the direct current bias is input to the direct axis or the zero axis. Compared with a manner in which only an end winding is used to emit heat in the conventional technology, because a current that is input to the motor includes an alternating component, iron loss and permanent magnet loss of the motor can be effectively excited, and heat emission power of the motor can be improved, so that a heating speed for a power battery is improved. In addition, heat emitted by a resistor of the motor controller 300 may also be used to heat the power battery. In addition, because a current on a direct current bus is also an alternating current, and a valid value of the alternating current is significantly greater than a valid current value existing when only a direct current is input, internal resistance of the battery can be fully utilized to heat the battery.

In addition, compared with a solution in which an alternating current that has no direct current bias is input to the direct axis or the zero axis, when upper limits of currents on the direct current bus are the same, if the alternating current with the direct current bias is input to the direct axis or the zero axis, an alternating component flowing through the direct current bus may be relatively small, so that fluctuation of the direct current bus can be reduced, and system reliability can be improved.

In actual application, a three-phase three-wire system or a three-phase four-wire system may be used for the inverter circuit 302. For a three-phase three-wire system and a three-phase four-wire system, the motor controller 300 may inject a current into the motor in different manners. The following separately describes the two cases.

### 1. Three-phase three-wire system

The three-phase three-wire system is used for the inverter circuit 302. The inverter circuit 302 is specifically configured to output a first alternating current with a direct current bias to the direct axis of the motor under control of the control apparatus 301.

For example, a schematic diagram of a structure of an inverter circuit in the three-phase three-wire system may be shown in FIG. 6. As described above, when a current is output to the direct axis of the motor, the motor controller 300 needs to transform I_d into a three-phase current I_u, I_v, and I_w through inverse transformation of park transformation, and input I_u, I_v, and I_w to the winding of the motor. The three-phase current that is output by the motor controller 300 to the winding of the motor is injected through three phase wires of the inverter circuit in the three-phase three-wire system.

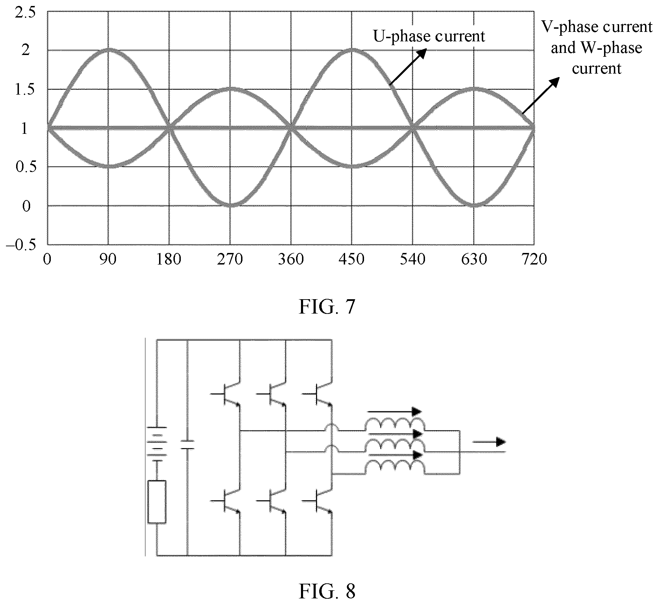

The alternating current with the direct current bias in the example b in FIG. 4 is used as an example. The current is transformed into a three-phase current. A waveform of the three-phase current may be shown in FIG. 7. It can be learned from FIG. 7 that, when the first alternating current with the direct current bias is input to the direct axis of the motor, phases in the three-phase current are the same or opposite, and amplitudes of the three-phase current are not equal. A V-phase current and a W-phase current have a same amplitude and a same phase, and a U-phase current and the V-phase current have opposite phases and different amplitudes.

The inverter circuit 302 outputs the first alternating current with the direct current bias to the direct axis of the motor. Because no current is input to a quadrature axis of the motor, the motor does not have additional vibration or torque. The first alternating current that has the direct current bias and that is input to the direct axis includes an alternating component. Therefore, iron loss and permanent magnet loss of the motor can be effectively excited, and heat emission power of the motor can be improved, so that a heating speed for a power battery is improved. In addition, heat emitted by a resistor of the motor controller 300 may also be used to heat the power battery.

It should be noted that when the first alternating current with the direct current bias is input to the direct axis of the motor, the amplitudes of the three-phase current are not equal. For example, in the example in FIG. 7, the amplitude of the U-phase current is larger, and the amplitudes of the V-phase current and the W-phase current are smaller. Therefore, a U-phase winding in the motor emits more heat, and the U-phase winding first reaches a temperature limit. In this case, a V-phase winding and a W-phase winding are still in a low temperature state. Therefore, a problem that a heat emission capability of the winding is not fully utilized exists in this motor heating manner.

### 2. Three-phase four-wire system

An inverter circuit in the three-phase four-wire system has one more neutral line of a power supply from a three-phase neutral point (star point) than the inverter circuit in the three-phase three-wire system.

When the three-phase four-wire system is used for the inverter circuit 302, the motor controller 300 may output a current to the motor in two manners.

### Manner 1

The three-phase four-wire system is used for the inverter circuit 302. The inverter circuit 302 is specifically configured to output a second alternating current with a direct current bias to the zero axis of the motor under control of the control apparatus 301, that is, output a zero-sequence current to the motor.

For example, a schematic diagram of a structure of an inverter circuit in the three-phase four-wire system may be shown in FIG. 8. As described above, when a current is output to the zero axis of the motor, the motor controller needs to transform I_d into a three-phase current I_u, I_v, and I_w through inverse transformation of park transformation, and input I_u, I_v, and I_w to the winding of the motor. The three-phase current that is output to the winding of the motor is input through three phase wires of the inverter circuit in the three-phase four-wire system.

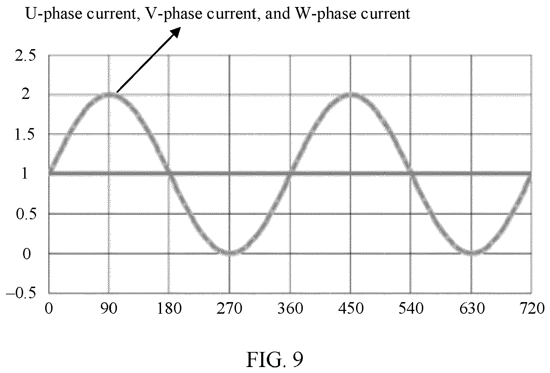

It is assumed that a waveform of the second alternating current that has the direct current bias and that is output by the inverter circuit 302 to the zero axis of the motor is the same as the waveform shown in the example b in FIG. 4. The current with the foregoing waveform is transformed into a three-phase current, and a waveform of the three-phase current may be shown in FIG. 9. It can be learned from FIG. 9 that, when the second alternating current with the direct current bias is input to the zero axis of the motor, amplitudes and phases of the three-phase current are the same.

The inverter circuit 302 outputs the second alternating current with the direct current bias to the zero axis of the motor. Because no current is input to a quadrature axis of the motor, the motor does not have additional vibration or torque. The second alternating current that has the direct current bias and that is input to the zero axis includes an alternating component. Therefore, iron loss and permanent magnet loss of the motor can be effectively excited, and heat emission power of the motor can be improved, so that a heating speed for a power battery is improved. In addition, heat emitted by a resistor of the motor controller 300 may also be used to heat the power battery.

In addition, when the second alternating current with the direct current bias is input to the zero axis of the motor, a three-phase current has a same amplitude and a same phase. Therefore, a three-phase winding in the motor evenly emits heat and has a same temperature, and a case in which one phase winding reaches a temperature limit but temperatures of the other two phase windings are relatively low does not occur, so that a heat emission capability of the winding can be more fully utilized.

It should be noted that the three-phase four-wire system has one more neutral line of a power supply from a three-phase neutral point (star point) than the three-phase three-wire system. In this embodiment of this application, the second alternating current with the direct current bias is output to the zero axis of the motor, and a current flows through the neutral line of the power supply. Therefore, the inverter circuit 302 provides a flowing loop for the current on the neutral line of the power supply. If the inverter circuit 302 is not configured with such a loop, an additional star point loop needs to be connected.

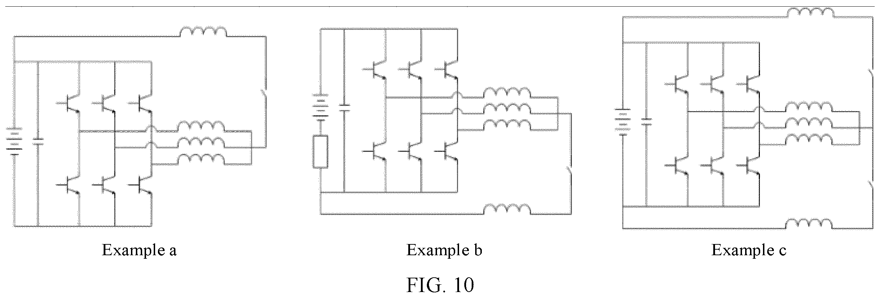

Specially, the inverter circuit 302 is connected to a direct current bus and a two-level topology is used for the inverter circuit 302. A manner in which the star point loop is connected may be as follows: 1. A neutral point of the inverter circuit 302 is connected to a positive electrode of the direct current bus through a first switch unit and a first inductor, as shown in an example a in FIG. 10. 2. A neutral point of the inverter circuit 302 is connected to a negative electrode of the direct current bus through a second switch unit and a second inductor, as shown in an example b in FIG. 10. 3. A neutral point of the inverter circuit 302 is connected to a positive electrode of the direct current bus through a third switch unit and a third inductor, and the neutral point of the inverter circuit 302 is connected to a negative electrode of the direct current bus through a fourth switch unit and a fourth inductor, where the third switch unit and the fourth switch unit are not closed at the same time, as shown in an example c in FIG. 10.

In some cases, a topology of the inverter circuit 302 may provide a loop for the current flowing through the neutral line of the power supply, and therefore, there is no need to additionally connect a star point loop.

### Case 1:

If the inverter circuit 302 includes two circuits that have an inverter function, the inverter circuit 302 already includes a star point loop, and there is no need to additionally connect a star point loop.

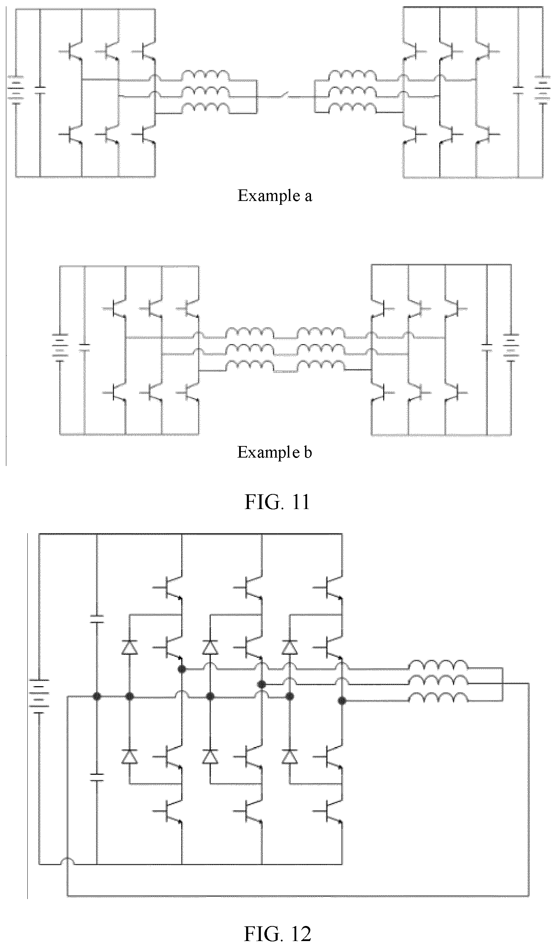

For example, an inverter circuit 302 disposed for a dual three-phase motor or a six-phase motor may be shown in an example a in FIG. 11. The inverter circuit 302 includes two circuits that have an inverter function, and there is no need to additionally connect a star point loop.

For another example, an open-winding structure is used for the inverter circuit 302, and there is no need for the inverter circuit 302 to additionally connect to a star point loop, as shown in an example b in FIG. 11.

### Case 2:

If a multi-level topology is used for the inverter circuit 302, because the multi-level topology includes a star point loop, there is no need to additionally connect a star point loop.

For example, a structure of the inverter circuit 302 using a three-level topology may be shown in FIG. 12. It can be learned from FIG. 12 that the inverter circuit 302 already includes a loop in which a current on a neutral point (star point) flows.

It should be noted that only the three-level topology shown in FIG. 12 is used as an example for illustration in this embodiment of this application. In the conventional technology, another three-level topology, a five-level topology, or a multi-level topology is also applicable to this embodiment of this application.

### Manner 2

The three-phase four-wire system is used for the inverter circuit 302. The control apparatus 301 is specifically configured to control the inverter circuit 302 to output a third alternating current with a direct current bias to the direct axis of the motor.

In other words, if the three-phase four-wire system is used for the inverter circuit 302, the control apparatus 301 may also control the inverter circuit 302 to output the third alternating current with the direct current bias to the direct axis of the motor. In this case, no current flows through the neutral line of the power supply.

In the manner 2, for a manner of connecting a star point loop, refer to related descriptions in the manner 1, and details are not described herein again.

Compared with the manner 1, in the manner 2, amplitudes and phases of the three-phase current are not completely the same (refer to the example in FIG. 7). Therefore, there is the foregoing problem that a heat emission capability of a winding is not fully utilized.

In conclusion, a current is input to the motor by using the motor controller 300 provided in embodiments of this application. Because no current is input to a quadrature axis of the motor, the motor does not have additional vibration or torque. The alternating current with the direct current bias is input to the direct axis or the zero axis. Compared with a manner in which only an end winding is used to emit heat in the conventional technology, because a current that is input to the motor includes an alternating component, iron loss and permanent magnet loss of the motor can be effectively excited, and heat emission power of the motor can be improved, so that a heating speed for a power battery is improved. In addition, heat emitted by a resistor of the motor controller 300 may also be used to heat the power battery.

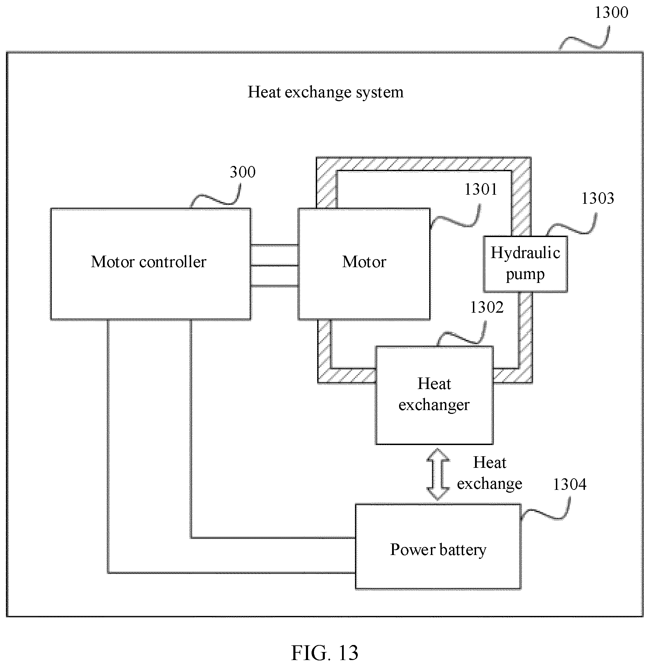

An embodiment of this application further provides a heat exchange system. As shown in FIG. 13, the heat exchange system 1300 includes a motor 1301, a heat exchanger 1302, a hydraulic pump 1303, a power battery 1304, and the foregoing motor controller 300. The motor 1301, the heat exchanger 1302, and the hydraulic pump 1303 are connected through a pipe.

The motor controller 300 is configured to output an alternating current to a direct axis or a zero axis of the motor 1301, where the alternating current has a direct current bias, and the alternating current is used to enable the motor 1301 to emit heat.

The hydraulic pump 1303 is configured to drive the pipe, so that the heat emitted by the motor 1301 is exchanged to the power battery 1304 through the heat exchanger 1302.

The motor 1301 may be an oil-cooled motor. A schematic diagram of a possible structure of the motor 1301 may be shown in FIG. 2. Certainly, a structure of another oil-cooled motor in the conventional technology is also applicable to this embodiment of this application.

It should be noted that for a specific working principle and a connection manner of the heat exchange system 1300, refer to related descriptions in the heat exchange system shown in FIG. 1. Details are not described herein again.

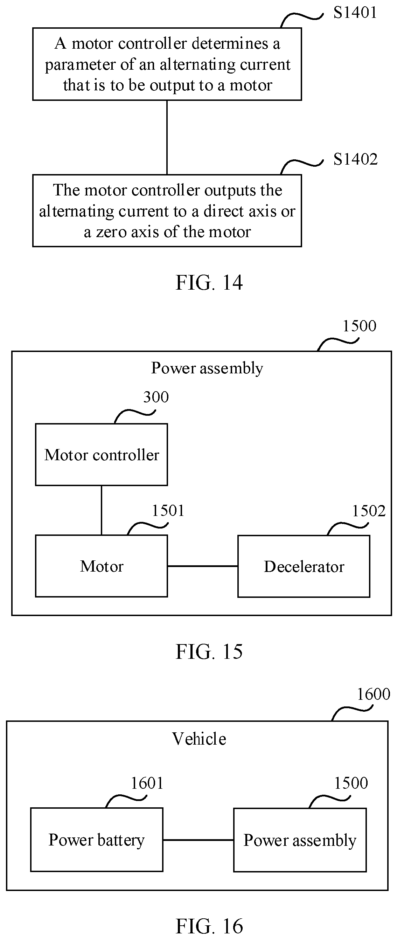

Based on a same inventive concept, an embodiment of this application further provides a current injection method. Refer to FIG. 14. The method includes the following steps.

S1401. A motor controller determines a parameter of an alternating current that is to be output to a motor.

The alternating current has a direct current bias, and is used to heat the motor.

Specifically, parameters of the alternating current include a waveform, a phase, an amplitude, a frequency, and a direct current bias value. The alternating current that has the direct current bias and that is output to the motor is used to heat the motor, so as to heat a power battery. Therefore, the motor controller may determine the parameter of the alternating current based on factors such as a temperature of the motor, a temperature of the power battery, and a current limit and a temperature limit of a three-phase winding of the motor.

S1402. The motor controller outputs the alternating current to a direct axis or a zero axis of the motor.

The current injection method may be considered as a method performed by the foregoing motor controller 300. By performing this method, the motor controller 300 can input a current to the motor, to heat the motor. For a detailed implementation process of the method performed by the motor controller 300, refer to related descriptions of the motor controller 300 shown in FIG. 3. Details are not described herein again.

Based on a same inventive concept, an embodiment of this application further provides a power assembly. As shown in FIG. 15, a power assembly 1500 includes a motor 1501, a decelerator 1502, and the foregoing motor controller 300.

In addition, an embodiment of this application further provides a vehicle. As shown in FIG. 16, a vehicle 1600 includes a power battery 1601 and the power assembly 1500.

## Claims

1. A motor controller (300), comprising a control apparatus (301) and an inverter circuit (302), wherein
the control apparatus (301) is configured to control the inverter circuit (302) to input an alternating current to a motor, the motor having a direct axis, a quadrature axis, and a zero axis in a dq coordinate system, the zero axis being perpendicular to the direct axis and the quadrature axis, wherein the alternating current has a direct current bias, and the alternating current is used to heat the motor; and
the inverter circuit (302) is configured to output the alternating current to the zero axis of the motor under control of the control apparatus (301);
**characterized in that** the inverter circuit comprises a three-phase four-wire system, the three-phase four-wire system comprising three phase wires and a neutral line from a three-phase neutral point of the three phase wires and the inverter circuit is specifically configured to:
output a first alternating current with a direct current bias to the zero axis of the motor under control of the control apparatus (301);
wherein: the neutral line is connected to a positive electrode of a direct current bus through a first switch unit and a first inductor, such that a current flows through the neutral line; the neutral line is connected to a negative electrode of the direct current bus through a second switch unit and a second inductor, such that a current flows through the neutral line; or the neutral line is connected to the positive electrode of the direct current bus through a third switch unit and a third inductor and to the negative electrode of the direct current bus through a fourth switch unit and a fourth inductor, wherein the third switch unit and the fourth switch unit are not closed at the same time, such that a current flows through the neutral line.

2. The motor controller (300) according to claim 1, wherein the alternating current is any one of a sine wave, a rectangular wave, a triangular wave, a sawtooth wave, and a trapezoidal wave.

3. The motor controller (300) according to any one of claims 1 to 2, wherein the alternating current has no negative value.

4. A heat exchange system (1300), comprising a motor (103, 1301), a heat exchanger (104, 1302), a hydraulic pump (105, 1302), a power battery (101, 1304), and the motor controller (102, 300) according to any one of claims 1 to 3, wherein
the motor (103, 1301), the heat exchanger (104 1302), and the hydraulic pump (105, 1303) are connected through a pipe;
the motor controller (102, 300) is configured to output an alternating current to a zero axis of the motor (103, 1301), wherein the alternating current has a direct current bias, and the alternating current is used to enable the motor (103, 1301) to emit heat; and
the hydraulic pump (105, 1303)is configured to drive the pipe, so that the heat emitted by the motor (103, 1301) is exchanged to the power battery (101, 1304) through the heat exchanger (104, 1302).

5. The heat exchange system according to claim 4, wherein the motor (103, 1301) is an oil-cooled motor.

6. A current injection method, comprising:
determining (S1401), by a motor controller comprising an inverter, a parameter of an alternating current that is to be output to a motor, the motor having a direct axis, a quadrature axis, and a zero axis in a dq coordinate system, the zero axis being perpendicular to the direct axis and the quadrature axis, wherein the alternating current has a direct current bias, and the alternating current is used to heat the motor; and
outputting (S1402), by the inverter, the alternating current to a zero axis of the motor;
**characterized in that** the inverter circuit comprises a three-phase four-wire system, the three-phase four-wire system comprising three phase wires and a neutral line from a three-phase neutral point of the three phase wires and the method comprises:
outputting, by the inverter, a first alternating current with a direct current bias to the zero axis of the motor;
wherein: the neutral line is connected to a positive electrode of a direct current bus through a first switch unit and a first inductor, such that a current flows through the neutral line; the neutral line is connected to a negative electrode of the direct current bus through a second switch unit and a second inductor, such that a current flows through the neutral line; or the neutral line is connected to the positive electrode of the direct current bus through a third switch unit and a third inductor and to the negative electrode of the direct current bus through a fourth switch unit and a fourth inductor, wherein the third switch unit and the fourth switch unit are not closed at the same time, such that a current flows through the neutral line.

7. A power assembly (1500), comprising a motor (1501), a decelerator (1502), and the motor (300) controller according to any one of claims 1 to 3.

8. A vehicle (1600), comprising a power battery (1601) and the power assembly (1500) according to claim 7.

## Patentansprüche

1. Motorsteuerung (300), die eine Steuereinrichtung (301) und eine Wechselrichterschaltung (302) umfasst, wobei
die Steuereinrichtung (301) konfiguriert ist, um die Wechselrichterschaltung (302) zu steuern, um einen Wechselstrom in einen Motor einzuspeisen, wobei der Motor eine direkte Achse, eine Quadraturachse und eine Nullachse in einem dq-Koordinatensystem aufweist, wobei die Nullachse senkrecht zu der direkten Achse und der Quadraturachse ist, wobei der Wechselstrom eine Gleichstromvorspannung aufweist, und der Wechselstrom verwendet wird, um den Motor zu heizen; und
die Wechselrichterschaltung (302) konfiguriert ist, um den Wechselstrom an die Nullachse des Motors unter Steuerung der Steuereinrichtung (301) auszugeben; **dadurch gekennzeichnet, dass** die Wechselrichterschaltung ein dreiphasiges Vierleitersystem umfasst, wobei das dreiphasige Vierleitersystem drei Phasenleiter und eine Neutralleitung von einem dreiphasigen Neutralpunkt der drei Phasenleiter umfasst und die Wechselrichterschaltung spezifisch konfiguriert ist zum:
Ausgeben eines ersten Wechselstroms mit einer Gleichstromvorspannung an die Nullachse des Motors unter Steuerung der Steuereinrichtung (301);
wobei: die Neutralleitung durch eine erste Schalteinheit und eine erste Drosselspule mit einer positiven Elektrode einer Gleichstromsammelschiene verbunden ist, so dass ein Strom durch die Neutralleitung fließt; die Neutralleitung durch eine zweite Schalteinheit und eine zweite Drosselspule mit einer negativen Elektrode der Gleichstromsammelschiene verbunden ist, so dass ein Strom durch die Neutralleitung fließt; oder die Neutralleitung mit der positiven Elektrode der Gleichstromsammelschiene durch eine dritte Schalteinheit und eine dritte Drosselspule und mit der negativen Elektrode der Gleichstromsammelschiene durch eine vierte Schalteinheit und eine vierte Drosselspule verbunden ist, wobei die dritte Schalteinheit und die vierte Schalteinheit nicht gleichzeitig geschlossen sind, so dass ein Strom durch die Neutralleitung fließt.

2. Motorsteuerung (300) nach Anspruch 1, wobei der Wechselstrom eine beliebige von einer Sinuswelle, einer Rechteckwelle, einer Dreieckswelle, einer Sägezahnwelle und einer Trapezwelle ist.

3. Motorsteuerung (300) nach einem der Ansprüche 1 bis 2, wobei der Wechselstrom keinen negativen Wert aufweist.

4. Wärmeaustauschsystem (1300), das einen Motor (103, 1301), einen Wärmetauscher (104, 1302), eine Hydraulikpumpe (105, 1302), eine Antriebsbatterie (101, 1304) und die Motorsteuerung (102, 300) nach einem der Ansprüche 1 bis 3 umfasst, wobei
der Motor (103, 1301), der Wärmetauscher (104, 1302) und die Hydraulikpumpe (105, 1303) durch ein Rohr verbunden sind;
die Motorsteuerung (102, 300) konfiguriert ist, um einen Wechselstrom an eine Nullachse des Motors (103, 1301) auszugeben, wobei der Wechselstrom eine Gleichstromvorspannung aufweist, und der Wechselstrom verwendet wird, um dem Motor (103, 1301) zu ermöglichen, Wärme abzugeben; und
die Hydraulikpumpe (105, 1303) konfiguriert ist, um das Rohr anzutreiben, sodass die Wärme, die durch den Motor (103, 1301) abgegeben wird, durch den Wärmetauscher (104, 1302) an die Antriebsbatterie (101, 1304) ausgetauscht wird.

5. Wärmeaustauschsystem nach Anspruch 4, wobei der Motor (103, 1301) ein ölgekühlter Motor ist.

6. Strominjektionsverfahren, das umfasst:
Bestimmen (S1401), durch eine Motorsteuerung, die einen Wechselrichter umfasst, eines Parameters eines Wechselstroms, der an einen Motor ausgegeben werden soll, wobei der Motor eine direkte Achse, eine Quadraturachse und eine Nullachse in einem dq-Koordinatensystem aufweist, wobei die Nullachse senkrecht zu der direkten Achse und der Quadraturachse ist, wobei der Wechselstrom eine Gleichstromvorspannung aufweist, und der Wechselstrom verwendet wird, um den Motor zu erwärmen; und
Ausgeben (S1402), durch den Wechselrichter, des Wechselstroms an eine Nullachse des Motors;
**dadurch gekennzeichnet, dass** die Wechselrichterschaltung ein dreiphasiges Vierleitersystem umfasst, wobei das dreiphasige Vierleitersystem drei Phasenleiter und eine Neutralleitung von einem dreiphasigen Neutralpunkt der drei Phasenleiter umfasst und das Verfahren umfasst:
Ausgeben, durch den Wechselrichter, eines ersten Wechselstroms mit einer Gleichstromvorspannung an die Nullachse des Motors;
wobei: die Neutralleitung durch eine erste Schalteinheit und eine erste Drosselspule mit einer positiven Elektrode einer Gleichstromsammelschiene verbunden ist, so dass ein Strom durch die Neutralleitung fließt; die Neutralleitung durch eine zweite Schalteinheit und eine zweite Drosselspule mit einer negativen Elektrode der Gleichstromsammelschiene verbunden ist, so dass ein Strom durch die Neutralleitung fließt; oder die Neutralleitung mit der positiven Elektrode der Gleichstromsammelschiene durch eine dritte Schalteinheit und eine dritte Drosselspule und mit der negativen Elektrode der Gleichstromsammelschiene durch eine vierte Schalteinheit und eine vierte Drosselspule verbunden ist, wobei die dritte Schalteinheit und die vierte Schalteinheit nicht gleichzeitig geschlossen sind, so dass ein Strom durch die Neutralleitung fließt.

7. Antriebsanordnung (1500), das einen Motor (1501), einen Verzögerer (1502) und die Motor(300)-Steuerung nach einem der Ansprüche 1 bis 3 umfasst.

8. Fahrzeug (1600), das eine Antriebsbatterie (1601) und die Antriebsanordnung (1500) nach Anspruch 7 umfasst.

## Revendications

1. Dispositif de commande de moteur (300), comprenant un appareil de commande (301) et un circuit inverseur (302), dans lequel
l'appareil de commande (301) est configuré pour commander le circuit inverseur (302) afin d'approvisionner un moteur en courant alternatif, le moteur ayant un axe direct, un axe en quadrature et un axe zéro dans un système de coordonnées dq, l'axe zéro étant perpendiculaire à l'axe direct et à l'axe en quadrature, dans lequel le courant alternatif a une polarisation en courant continu, et le courant alternatif est utilisé pour chauffer le moteur ; et
le circuit inverseur (302) est configuré pour fournir le courant alternatif à l'axe zéro du moteur sous la commande de l'appareil de commande (301) ;
**caractérisé en ce que** le circuit inverseur comprend un système triphasé à quatre conducteurs, le système triphasé à quatre conducteurs comprenant trois conducteurs de phase et une ligne neutre à partir d'un point neutre triphasé des trois conducteurs de phase et le circuit inverseur est spécifiquement configuré pour :
fournir un premier courant alternatif avec une polarisation en courant continu vers l'axe zéro du moteur sous la commande de l'appareil de commande (301) ;
dans lequel : la ligne neutre est connectée à une électrode positive d'un bus de courant continu par le biais d'une première unité de commutation et d'un premier inducteur, de telle sorte qu'un courant circule à travers la ligne neutre ; la ligne neutre est connectée à une électrode négative du bus de courant continu par le biais d'une deuxième unité de commutation et d'un deuxième inducteur, de telle sorte qu'un courant circule à travers la ligne neutre ; ou la ligne neutre est connectée à l'électrode positive du bus de courant continu par le biais d'une troisième unité de commutation et d'un troisième inducteur et à l'électrode négative du bus de courant continu par le biais d'une quatrième unité de commutation et d'un quatrième inducteur, dans lequel la troisième unité de commutation et la quatrième unité de commutation ne sont pas fermées en même temps, de telle sorte qu'un courant circule à travers la ligne neutre.

2. Dispositif de commande de moteur (300) selon la revendication 1, dans lequel le courant alternatif est l'un quelconque parmi une onde sinusoïdale, une onde rectangulaire, une onde triangulaire, une onde en dents de scie et une onde trapézoïdale.

3. Dispositif de commande de moteur (300) selon l'une quelconque des revendications 1 à 2, dans lequel le courant alternatif n'a aucune valeur négative.

4. Système d'échange de chaleur (1300), comprenant un moteur (103, 1301), un échangeur de chaleur (104, 1302), une pompe hydraulique (105, 1302), une batterie d'alimentation (101, 1304) et le dispositif de commande de moteur (102, 300) selon l'une quelconque des revendications 1 à 3, dans lequel
le moteur (103, 1301), l'échangeur de chaleur (104, 1302) et la pompe hydraulique (105, 1303) sont raccordés par le biais d'un tuyau ;
le dispositif de commande de moteur (102, 300) est configuré pour fournir un courant alternatif à un axe zéro du moteur (103, 1301), dans lequel le courant alternatif a une polarisation en courant continu, et le courant alternatif est utilisé pour permettre au moteur (103, 1301) d'émettre de la chaleur ; et
la pompe hydraulique (105, 1303) est configurée pour entraîner le tuyau, de sorte que la chaleur émise par le moteur (103, 1301) est échangée vers la batterie d'alimentation (101, 1304) par le biais de l'échangeur de chaleur (104, 1302).

5. Système d'échange de chaleur selon la revendication 4, dans lequel le moteur (103, 1301) est un moteur refroidi par huile.

6. Procédé d'injection de courant, comprenant :
la détermination (S1401), par un dispositif de commande de moteur comprenant un inverseur, d'un paramètre d'un courant alternatif qui doit être fourni à un moteur, le moteur ayant un axe direct, un axe en quadrature et un axe zéro dans un système de coordonnées dq, l'axe zéro étant perpendiculaire à l'axe direct et à l'axe en quadrature, dans lequel le courant alternatif a une polarisation en courant continu, et le courant alternatif est utilisé pour chauffer le moteur ; et
la fourniture (S1402), par l'inverseur, du courant alternatif à un axe zéro du moteur ;
**caractérisé en ce que** le circuit inverseur comprend un système triphasé à quatre conducteurs, le système triphasé à quatre conducteurs comprenant trois conducteurs de phase et une ligne neutre à partir d'un point neutre triphasé des trois conducteurs de phases et le procédé comprend :
la fourniture, par l'inverseur, d'un premier courant alternatif avec une polarisation en courant continu vers l'axe zéro du moteur ;
dans lequel : la ligne neutre est connectée à une électrode positive d'un bus de courant continu par le biais d'une première unité de commutation et d'un premier inducteur, de telle sorte qu'un courant circule à travers la ligne neutre ; la ligne neutre est connectée à une électrode négative du bus de courant continu par le biais d'une deuxième unité de commutation et d'un deuxième inducteur, de telle sorte qu'un courant circule à travers la ligne neutre ; ou la ligne neutre est connectée à l'électrode positive du bus de courant continu par le biais d'une troisième unité de commutation et d'un troisième inducteur et à l'électrode négative du bus de courant continu par le biais d'une quatrième unité de commutation et d'un quatrième inducteur, dans lequel la troisième unité de commutation et la quatrième unité de commutation ne sont pas fermées en même temps, de telle sorte qu'un courant circule à travers la ligne neutre.

7. Ensemble d'alimentation (1500), comprenant un moteur (1501), un décélérateur (1502) et le dispositif de commande de moteur (300) selon l'une quelconque des revendications 1 à 3.

8. Véhicule (1600), comprenant une batterie d'alimentation (1601) et l'ensemble d'alimentation (1500) selon la revendication 7.
